# EUROPEAN PATENT SPECIFICATION

(11) **EP 0 393 963 B1**
(45) Date of publication and mention of the grant of the patent: **07.06.1995**
(21) Application number: 90304055.8
(22) Date of filing: 12.04.1990
(51) Int. Cl.: C11B 15/00, A23D 9/04, A23K 1/16

(54) **Method and apparatus for cryogenic crystallization of fats**
Verfahren und Vorrichtung zum kryogenen Kristallisieren von Fetten
Procédé et dispositif pour la cristallisation cryogénique de graisses

(30) Priority: 17.04.1989 US 338323
(43) Date of publication of application: 24.10.1990
(73) Proprietor: CANADIAN OXYGEN LIMITED, Mississauga, Ontario L5B 2V2 (CA)
(72) Inventor: Lilakos, Louis, Oakville, Ontario L5J 6P8 (CA)
(74) Representative: Bousfield, Roger James

(56) References cited:
- DE-A- 2 002 169
- DE-A- 2 209 565
- DE-A- 2 253 515
- GB-A- 1 164 462

## Description

The invention relates to a method and apparatus for converting liquid fats, oils or tallows into microcrystalline powders useful in the compounding of dry animal feeds and in other applications in the food industry. In the following description and claims, the term "liquid fat" will be used generically to include liquid or molten fats, oils or tallows.

In order to induce upper growth and fattening of livestock, it is desirable to add fats to the animal feed. In the raising of veal, a 20% level of added fat is typically employed. For this purpose, it is common commercial practice in the feed industry to spray liquid fat directly into the blender in which dry feed ingredients are mixed. A variety of spray nozzles arranged in different configurations are employed to spray or spread the liquid fat over the greatest possible surface area in the mixing blender, with the aim of making a homogeneous mix through which the fat is uniformly dispersed.

Even at levels of added liquid fat of as low as 5% - 10%, however, mixing problems can develop. Non-uniformity in the mixing of liquid fat can give rise to lumps containing higher concentrations of fats, which must be isolated from the rest of the batch for disposal or remixing; either corrective measure is wasteful and/or time consuming. Dry feed ingredients can only absorb a certain percentage by weight of added liquid fat before becoming "wet" (saturated), whereupon the texture of the mix changes from dry and powdery to wet and plastic. Saturation by fat during the mixing process is extremely undesirable, as it usually requires the entire batch of feed to be scrapped.

Accordingly, where the feed or food product formula calls for a mix including a higher percentage of fat, near or above the point where the addition of sprayed liquid fat would cause saturation, the practice has been to add pre-dried powdered fats in bag form to the mixture. Known such products are variously prepared by the cooling and flaking of liquid films of fat, or by spraying hot liquid fat to solidify into a powder. The purchase of fifty pound (22.7kg) bags of powdered fat is quite costly, however, and the mixing of powdered fats with feed is both labour intensive and time consuming, as the bagged powdered fat must be added manually into the blender.

DE 2253515 discloses a method of producing pastry mixes and the like in which, flour and dry ingredients are kneaded with molten fat and the mixture has added to it a volatile coolant which is sprayed from a nozzle simultaneously with the mixture thereby to form a granulate. DE 2209565 discloses a process in which liquid fat is sprayed downwardly into a cooling apparatus. The fat droplets are crystallized by means of cold air which is directed in the opposite direction of the fat droplet spray. GB 1,164 462 and DE 2002169 disclose a process in which liquid fat is sprayed into a cooling apparatus, crystallized eg. by means of nitrogen and sprayed directly into a continuous mixer to which the other ingredients of the mixture are being fed at the same time.

The present invention is based on the discovery that the conversion of liquid fat to a crystallized or powdered form in situ, by spraying fat and a cryogenic liquid coolant such as liquid nitrogen or carbon dioxide together into the mixer, produces a homogeneous mix free of fat lumps, even at the higher fat percentages required for some animal feeds.

Crystallizing the fat in the blender itself has the substantial practical advantage of eliminating the need for costly heat dried pre-bagged powdered fats and absorbing agents. The consistent production of a dry batch of feed mix not only avoids waste, but reduces the labour and time which had previously been required for clean-up of mix sticking to the walls of the blender. Quality control is also improved over the liquid spray addition process, since a more uniform batch can be consistently achieved. Further, the direct introduction of cryogenically solidified liquid fat particles has the effect of lowering the overall temperature of the batch, thereby partially off-setting the heat generated by the friction of the blending process.

With a view to achieving the aforementioned advantages, the invention is in one aspect directed to a method of producing solid particles of fat for blending with dry ingredients in a mixing chamber.

In accordance with this aspect of the invention, there is provided a method of producing solid particles of fat in a mixing chamber, comprising introducing a fine, downwardly directed spray of atomized liquid fat into the upper portion of a mixing chamber while directing a plurality of fine jets of cryogenic liquid against the downward spray of liquid fat droplets so as to cause rapid conversion thereof to solid particles which fall into the bottom of the mixing chamber characterised in that the fine jets of cryogenic liquid are regularly dispersed in circular symmetry about the spray of atomized liquid fat and directed obliquely inwardly against the liquid fat droplets.

Preferably the cryogenic liquid comprises nitrogen or carbon dioxide.

In accordance with another aspect of the invention, there is provided apparatus for producing solid particles of fat in a mixing chamber, comprising:
(a) means disposed in the upper plenum of said mixing chamber operable to produce a downwardly directed spray of atomized liquid fat; and
(b) means for producing a radially inwardly-directed spray of liquid nitrogen or carbon dioxide to surround and impinge against the downwardly directed spray of liquid fat droplets.

Preferably the means operable to produce a spray of liquid fat comprises an atomizing nozzle in communication with an external source of liquid fat under pressure, and first valve means for controlling the rate of spraying of liquid fat through the atomizing nozzle.

In addition, it is preferred that the means for producing a radially inwardly directed spray of liquid nitrogen comprises:
(a) a tubular spray ring surrounding the downward spray from the nozzle and presenting along the bottom thereof a plurality of regularly spaced spray holes, the holes being angled inwardly to direct liquid nitrogen or carbon dioxide introduced under pressure into the spray ring in a conical spray pattern converging on the stream of atomized liquid fat droplets;
(b) an external source of pressurized liquid nitrogen or carbon dioxide; and
(c) second valve means interposed between the source of liquid nitrogen or carbon dioxide and the spray ring, operable to control the spray of liquid nitrogen or carbon dioxide through the spray ring.

Ideally, the atomizer nozzle and the tubular spray ring are enclosed within and disposed at the top of a cylindrical housing opening downwardly into the top of the mixing chamber.

In accordance with a further aspect of the invention, there is provided apparatus for blending liquid fat with dry animal feed to produce a free-flowing mix, comprising:
(a) a mixing chamber equipped with means for stirring feed mix and added particles of fat together;
(b) a plurality of cylindrical housings distributed along the top of the chamber, each having a bottom opening communicating with the interior of the chamber;
(c) an atomizing nozzle disposed within each of the cylindrical housings in the upper portion thereof, adapted to direct a downwardly directed spray of atomized liquid fat particles into the top of its cylindrical housing when operably connected to a controlled external source of liquid fat and air under pressure; and
(d) a tubular spray ring mounted within each of the cylindrical housings and configured to surround the downward spray of liquid fat droplets from the atomizing nozzle disposed therein with an inverted spray pattern of cryogenic liquid converging on the downward spray of liquid fat droplets from the atomizing nozzle, when the spray ring is operably connected with a controlled external source of pressurized cryogenic liquid.

To illustrate the invention, reference is now made, by way of exemplification only, to the accompanying drawings in which:
Figure 1 is a schematic representation of a feed blender equipped with apparatus according to a preferred embodiment of the invention;
Figure 2 is a vertical cross-sectional view of the atomizing nozzle, spray ring and cylindrical housing of a cryogenic crystallization apparatus according to the embodfiment illustrated in Figure 1;
Figure 3 schematically illustrates an alternative installation of apparatus according to the invention in a feed mixing blender.

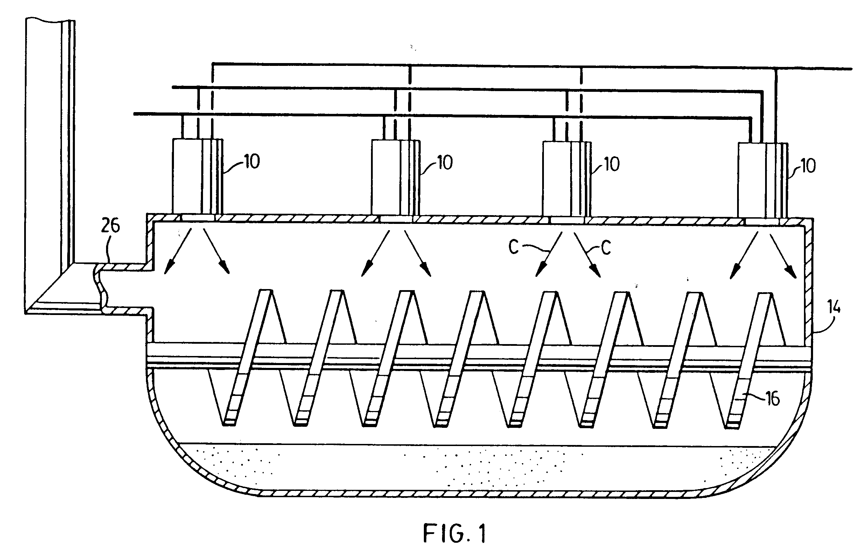

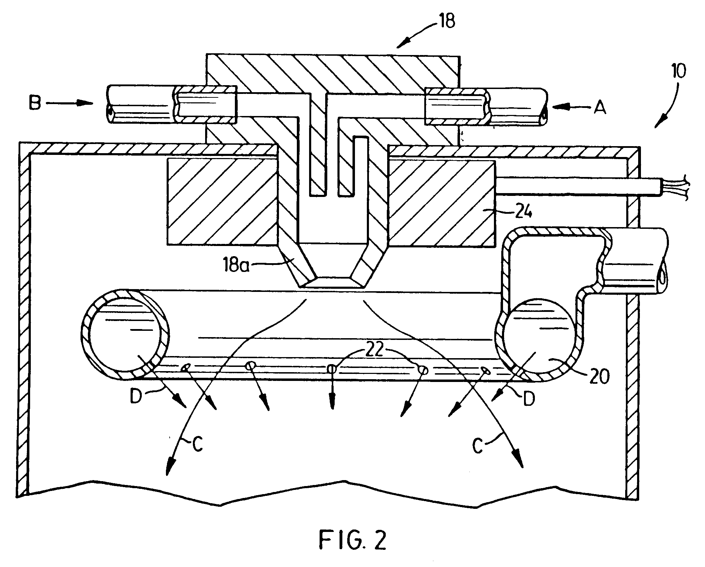

With reference to Figures 1 and 2, one or a plurality of cryogenic crystallization units according to the invention are housed in cylindrical shrouds 10 which open downwardly into the top of a conventional feed mixing chamber 14 equipped with a power driven blending auger 16. Associated with each cylindrical housing is a top-mounted atomizing nozzle, indicated generally at 18 in Figure 2, operable to break up liquid fat sprayed therethrough into very small particles or droplets. Known such atomizing nozzles include an inlet through which liquid fat may be introduced (arrow A) and a separate channel for the introduction of air under pressure (arrow B). To obtain very fine atomization of the liquid fat, the simultaneous introduction of liquid fat and pressurized air through a known nozzle structure taking advantage of the Venturi principle should be used. Commercially available Venturi nozzles found to be useful in applying the present invention include 1/8J, 1/4J, 1/2J, and 1J sizes. However, if coarser fat particles are desired, nozzles using no air and liquid fat pressure alone may be employed.

The outer contour of the downwardly directed spray of liquid fat droplets issuing from the tip 18a of nozzle 18 is indicated by arrows C. The external sources of liquid fat under pressure and of pressurized air are not shown in the drawings, nor is the conventional valve means in the lines to control the fat and the air. A pair of Jamesbury ball valves are suitable for controlling the flows of liquid fat, air and nitrogen.

The atomized droplets of fat are sprayed with a cryogenic liquid introduced through a spray ring 20. The ring may be made of aluminium tubing, stainless steel or copper "K" of a diameter from 1/4" to 3/4" (6.3 to 19.0mm). The diameter of the ring itself will typically be between 6 and 8 inches (154 to 203mm), although the chosen size will vary to suit the mixing system designed for. The inner surface of the toroidal spray ring is drilled around its circumference with an evenly spaced plurality of small holes 22, the number and sizes of which will be chosen according to the flow rates of fat being sprayed.

It is important that holes 22 be drilled equidistant from each other around the circumference and have bores biased at an inward angle along the bottom of the spray ring, so as to produce an inverted conical spray pattern (arrows D) which converges downwardly and impinges on the stream C of atomized liquid fat droplets.

The cylindrical housing or shroud 10 functions to provide a surface on which to mount spray ring 20 and nozzle 18, but also to concentrate and contain the cold nitrogen and carbon dioxide in the vicinity of the atomized fat. Typically, the dimensions of the shroud will be of the order of 16 inches (406mm) diameter and 1 to 5 feet (304 to 1524mm) tall, varying according to the specific application.

Optionally, two heating elements may be included in the apparatus. The first heater, 24, is an element which wraps around nozzle 18 to prevent the fat injected therethrough from solidifying within the nozzle. The amount of heat may be regulated and controlled by a voltage controller (not shown).

The second heater consists of a standard heat wrap surrounding the shroud (not shown) to prevent any solidified fat from building up on the sides of the shroud. At the end of a day's operation, this second heater surrounding the shroud may be turned on for a few minutes to melt any solidified fat which has incidentally accumulated on the interior surface of the shroud.

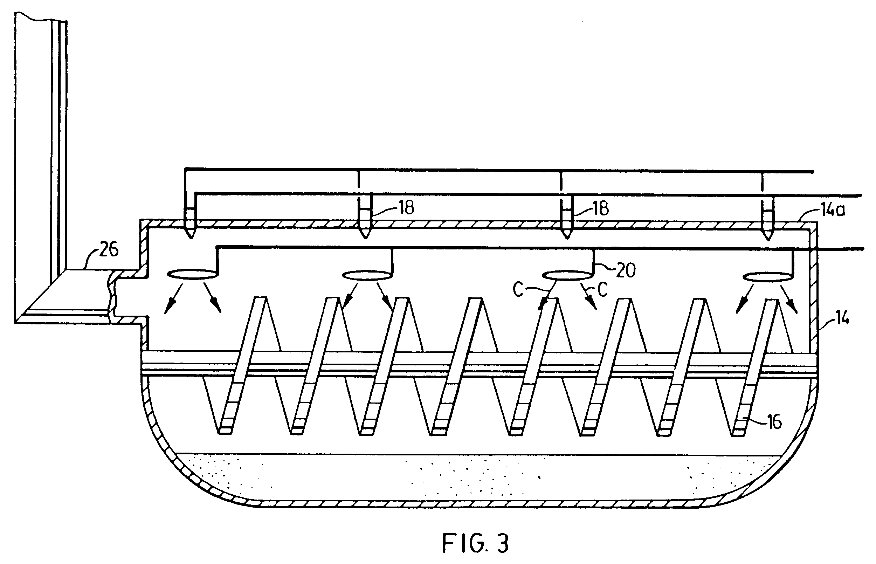

Although the presence of a shroud (housing) for the nozzle/spray ring combination is desirable for the reasons noted above, the method of the invention may be carried out by installing an array of nozzles and spray rings within a mixing chamber 14 directly under the top wall 14a thereof, where space limitations so require, as illustrated in Figure 3. If not already equipped with a vent or exhaust, a blender making use of the method and apparatus of the invention should be provided with an exhaust port 26 to vent the nitrogen and air introduced into the mixing chamber.

In operation, blender 14 is first charged with the basic dry ingredients for the animal feed or other product which is to be enriched with fat. Liquid fat is then pumped under pressure from a heated storage vessel through a pipe to the blender and is sprayed into the mix through a single or a series of atomizing spray nozzles 18. As noted above, the purpose of the spray nozzles is to atomize the fat into the smallest possible particles or droplets.

As the fat is sprayed into the plenum of the blender it is shocked with a spray of liquid nitrogen or carbon dioxide introduced through spray rings 20. It may also be advantageous in some cases to commence the nitrogen spraying cycle a few seconds before the fat spray cycle is commenced, to cool down the blender. During spraying of the cryogenic coolant, the heaters surrounding nozzles 18 are operated to prevent fat from freezing within and occluding the nozzles 18.

Crystals of fat similar to snow flakes fall from shrouds 10 into the blender and are uniformly distributed and mixed into the dry ingredients. The spraying of fat is stopped when the desired amount of material has been added and the nitrogen or carbon dioxide flow is stopped simultaneously, along with the heater on the nozzle, marking the conclusion of the mixing cycle. The batch is then emptied from the mixer, which is then charged with a new batch for repetition of the cycle.

It will be appreciated that the entire mixing process described above may be carried out automatically under the control of a microprocessor operable to time all stages of the mixing cycle and to actuate valve means to control the sprays of liquid fat, air and cryogenic coolant.

### Example 1

In a system for the production of animal feed, a fat mixture of palm oil and beef tallow was crystallized using liquid nitrogen inside a blender. The fat mixture, having a melting point around 95°F, was heated and stored in the heated vessel at 135°F (57.5°C). The fat was pumped through twelve 1/4J nozzles at approximately 40 psig (206.8kN/m²) pressure. The nozzles were located on the top inner surface of the mixer and arranged in three equidistant rows of four nozzles. Air was provided at 50 psig (344.7 kN/mm²) by compressor. Nitrogen coolant was stored in an 11,000 gallon (46,635l) liquid nitrogen storage vessel and conveyed through a 1 inch (25.4mm) diameter vacuum jacketed pipeline to a series of spray rings located directly below each nozzle.

At the start of the mixing cycle, 1,600 pounds (726kg) of dry ingredients, chiefly whey powder, were dumped into the mixutre. Fat, air, and nitrogen were sprayed simultaneously through the nozzles for a period of 2.5 minutes, over the course of which approximately 400 lbs. (181kg) of fat in total was sprayed. The percentage of fat in the final mix is determined by the selected amount of time that the fat, air and nitrogen are sprayed at a given pressure.

The mixture was then emptied and the batch of product was bagged. Samples of the mixture of crystallized fat and whey powder resembled fine flour. Fineness of the mix can be enhanced by increasing the amount of nitrogen and/or increasing the air pressure.

### Example 2

In the preparation of an enriched bakery product, vegetable oil was crystallized outside the blender and subsequently added to flour.

Vegetable oil in the form of solid 20 lb. (9.1kg) blocks (melting point approximately 75°F (23.9°C)) was placed in a heated vat at approximately 110°F (43°C). The melted oil was then pumped out of the vat and through a nozzzle/spray ring/shroud arrangement as described in connection with Figures 1 and 2. The fat was not sprayed into a blender, however, but directly into a drum located beneath the shroud, for approximately 10 minutes. About 40 lbs. (18.1kg) of crystallized oil was thereby collected and dumped into a mixer containing a desired proportion of flour. The entirety was mixed and the product batch was bagged. Sampling of the mixture showed the powder to be dry and free of lumps.

## Claims

1. A method of producing solid particles of fat in a mixing chamber, comprising introducing a fine, downwardly directed spray of atomized liquid fat into the upper portion of a mixing chamber while directing a plurality of fine jets of cryogenic liquid against the downward spray of liquid fat droplets so as to cause rapid conversion thereof to solid particles which fall into the bottom of the mixing chamber characterised in that the fine jets of cryogenic liquid are regularly dispersed in circular symmetry about the spray of atomized liquid fat and directed obliquely inwardly against the liquid fat droplets.

2. A method according to Claim 1 characterised in that the cryogenic liquid is nitrogen.

3. A method according to Claim 1 characterised in that the cryogenic liquid is carbon dioxide.

4. Apparatus for producing solid particles of fat in a mixing chamber (14), characterised by the provision of;
(a) means (18) disposed in the upper plenum of said mixing chamber operable to produce a downwardly directed spray of atomized liquid fat; and
(b) means (20) for producing a radially inwardly-directed spray of liquid nitrogen or carbon dioxide to surround and impinge against the downwardly directed spray of liquid fat droplets.

5. Apparatus according to Claim 4 characterised in that the means (18) operable to produce a spray of liquid fat comprises an atomizing nozzle (18a) in communication with an external source of liquid fat under pressure, and first valve means for controlling the rate of spraying of liquid fat through the atomizing nozzle (18a).

6. Apparatus according to Claim 4 or Claim 5 characterised in that the means (20) for producing a radially inwardly directed spray of liquid nitrogen comprises:
(a) a tubular spray ring (20) surrounding the downward spray from the nozzle and presenting along the bottom thereof a plurality of regularly spaced spray holes (22) , the holes (22) being angled inwardly to direct liquid nitrogen or carbon dioxide introduced under pressure into the spray ring (20) in a conical spray pattern converging on the stream of atomized liquid fat droplets;
(b) an external source of pressurized liquid nitrogen or carbon dioxide; and
(c) second valve means interposed between the source of liquid nitrogen or carbon dioxide and the spray ring, operable to control the spray of liquid nitrogen or carbon dioxide through the spray ring (20).

7. Apparatus according to Claim 6 characterised in that the atomizer nozzle (18a) and the tubular spray ring (20) are enclosed within and disposed at the top of a cylindrical housing (10) opening downwardly into the top of the mixing chamber (14).

8. Apparatus for blending liquid fat with dry animal feed to produce a free-flowing mix, characterised by the provision of;
(a) a mixing chamber (14) equipped with means for stirring feed mix and added particles of fat together;
(b) a plurality of cylindrical housings (10) distributed along the top of the chamber (14), each having a bottom opening communicating with the interior of the chamber (14);
(c) an atomizing nozzle (18a) disposed within each of the cylindrical housings (10) in the upper portion thereof, adapted to direct a downwardly directed spray of atomized liquid fat particles into the top of its cylindrical housing when operably connected to a controlled external source of liquid fat and air under pressure; and
(d) a tubular spray ring (20) mounted within each of the cylindrical housings (10) and configured to surround the downward spray of liquid fat droplets from the atomizing nozzle (18a) disposed therein with an inverted spray pattern of cryogenic liquid converging on the downward spray of liquid fat droplets from the atomizing nozzle (18a), when the spray ring is operably connected with a controlled external source of pressurized cryogenic liquid.

## Patentansprüche

1. Ein Verfahren zum Herstellen fester Teilchen aus Fett in einer Mischkammer, welches die Schritte enthält, daß ein feiner, nach unten gerichteter Sprühnebel aus zerstäubtem flüssigem, Fett in das obere Teilstück einer Mischkammer eingeführt wird, während eine Vielzahl von feinen Strahlen einer kryogenen Flüssigkeit gegen den nach unten gerichteten Sprühnebel aus flüssigen Fetttröpfchen gerichtet wird, um so eine schnelle Umwandlung davon in feste Teilchen zu bewirken, die in den Boden der Mischkammer fallen, dadurch gekennzeichnet, daß die feinen Strahlen einer kryogenen Flüssigkeit in einer kreissymmetrischen Anordnung um den Sprühnebel aus zerstäubtem flüssigem Fett herum regelmäßig verteilt und schräg nach innen gegen die flüssigen Fetttröpfchen gerichtet werden.

2. Ein Verfahren nach Anspruch 1, dadurch gekennzeichnet, daß die kryogene Flüssigkeit Stickstoff ist.

3. Ein Verfahren nach Anspruch 1, dadurch gekennzeichnet, daß die kryogene Flüssigkeit Kohlendioxid ist.

4. Gerät zum Erzeugen fester Teilchen aus Fett in einer Mischkammer (14), gekennzeichnet durch das Vorsehen von:
(a) Mittel (18), das in dem, oberen gefüllten Raum der Mischkammer angeordnet ist, welches wirksam sein kann, um einen nach unten gerichteten Sprühnebel aus zerstäubtem flüssigem Fett zu erzeugen; und
(b) Mittel (20), um einen radial nach innen gerichteten Sprühnebel aus flüssigem Stickstoff oder Kohlendioxid zu erzeugen, um den nach unten gerichteten Sprühnebel aus flüssigen Fetttröpfchen zu umgeben und auf ihn aufzutreffen.

5. Gerät nach Anspruch 4, dadurch gekennzeichnet, daß das Mittel (18), welches wirksam sein kann, um einen Sprühnebel aus flüssigem, Fett zu erzeugen, eine zerstäubende Düse (18a) in Verbindung mit einer externen Quelle für flüssiges Fett unter Druck und ein erstes Ventilmittel zum Regeln der Sprührate von flüssigem Fett durch die zerstäubende Düse (18a) enthält.

6. Gerät nach Anspruch 4 oder Anspruch 5, dadurch gekennzeichnet, daß das Mittel (20) zum Erzeugen eines radial nach innen gerichteten Sprühnebels aus flüssigem Stickstoff enthält:
(a) einen röhrenförmigen Sprühring (20), der den nach unten gerichteten Sprühnebel von der Düse umgibt und entlang des Bodens davon eine Vielzahl von regelmäßig beabstandeten Sprühlöchern (22) präsentiert bzw. aufweist, wobei die Löcher (22) unter einem nach innen gerichteten Winkel angeordnet sind, um flüssigen Stickstoff oder flüssiges Kohlendioxid, der oder das unter Druck in den Sprühring (20) eingeführt wird, in ein sich verjüngendes bzw. konisches Sprühmuster zu leiten, das auf den Strom aus zerstäubten flüssigen Fetttröpfchen zu konvergiert;
(b) eine externe Quelle für unter Druck gesetzten flüssigen Stickstoff oder unter Druck gesetztes flüssiges Kohlendioxid; und
(c) ein zweites Ventilmittel, das zwischen der Quelle für flüssigen Stickstoff oder flüssiges Kohlendioxid und dem Sprühring angeordnet ist, das wirksam sein kann, um den Sprühnebel aus flüssigem Stickstoff oder Kohlendioxid durch den Sprühring (20) zu regeln.

7. Gerät nach Anspruch 6, dadurch gekennzeichnet, daß die zerstäubende Düse (18a) und der röhrenförmige Sprühring (20) innerhalb eines zylindrischen Gehäuses (10) eingeschlossen und bei der Oberseite davon angeordnet sind, welches sich nach unten in die Oberseite bzw. das Oberteil der Mischkammer (14) öffnet.

8. Gerät zum Vermengen von flüssigem Fett mit trockener Tiernahrung, um ein freiströmendes Gemisch zu erzeugen, gekennzeichnet durch das Vorsehen:
(a) einer Mischkammer (14), die mit einem Mittel ausgestattet ist, um ein Nahrungsgemisch und hinzugefügte Teilchen aus Fett zusammenzurühren;
(b) einer Vielzahl zylindrischer Gehäuse (10), welche entlang der Oberseite der Kammer (14) verteilt sind, wobei jedes eine Bodenöffnung besitzt, die mit dem Inneren der Kammer (14) in Verbindung steht;
(c) einer zerstäubenden Düse (18a), welche innerhalb jedes der zylindrischen Gehäuse (10) in dessen oberem Teilstück angeordnet ist und einen nach unten gerichteten Sprühnebel aus zerstäubten flüssigen Fetteilchen in das Oberteil von ihrem zylindrischen Gehäuse richten kann, wenn sie mit einer geregelten externen Quelle für flüssiges Fett und Luft unter Druck betriebsfähig verbunden ist; und
(d) eines röhrenförmigen Sprührings (20), der innerhalb jedes der zylindrischen Gehäuse (10) angebracht und aufgebaut ist, um den nach unten gerichteten Sprühnebel aus flüssigen Fetttröpfchen von der zerstäubenden Düse (18a), die darin angeordnet ist, mit einem invertierten Sprühmuster einer kryogenen Flüssigkeit zu umgeben, das auf den nach unten gerichteten Sprühnebel aus flüssigen Fetttröpfchen von der zerstäubenden Düse (18a) zu konvergiert, wenn der Sprühring mit einer geregelten externen Quelle für eine unter Druck gesetzte kryogene Flüssigkeit betriebsfähig verbunden ist.

## Revendications

1. Procédé de production de particules solides de graisse dans une chambre mélangeuse, le procédé comprenant l'introduction d'une fine projection par pulvérisation dirigée vers le bas, d'une graisse liquide atomisée introduite dans la partie supérieure d'une chambre mélangeuse, cependant que l'on dirige plusieurs jets fins de liquide cryogénique contre les gouttelettes de graisse liquide projetées par pulvérisation vers le bas de façon à provoquer leur transformation rapide en des particules solides qui tombent au bas de la chambre de mélangeage, procédé caractérisé en ce que les fins jets du liquide cryogénique sont régulièrement dispersés en symétrie circulaire autour du courant projeté de graisse liquide atomisée et ils sont dirigés obliquement vers l'intérieur, vers et contre les gouttelettes de graisse liquide.

2. Procédé selon la revendication 1, caractérisé en ce que le liquide cryogénique est de l'azote.

3. Procédé selon la revendication 1, caractérisé en ce que le liquide cryogénique est du dioxyde de carbone.

4. Dispositif ou appareil pour produire des particules solides de graisse dans une chambre (14) de mélangeage, dispositif caractérisé en ce qu'il comporte :
(a) un moyen (18), disposé dans la partie supérieure de ladite chambre de mélangeage et pouvant fonctionner pour produire une pulvérisation, dirigée vers le bas, de graisse liquide atomisée ; et
(b) un moyen (20) pour produire une pulvérisation, dirigée radialement vers l'intérieur, d'azote liquide ou de dioxyde de carbone liquide afin d'entourer les gouttelettes de graisse liquide projetées par pulvérisation dirigée vers le bas et afin de heurter ces gouttelettes et de s'écraser contre elles.

5. Dispositif selon la revendication 4, caractérisé en ce que le moyen (18) pouvant fonctionner pour produire une pulvérisation de graisse liquide, comprend une buse (18a) d'atomisation, qui communique avec une source externe de graisse liquide sous pression, et un premier ensemble de valves pour commander le débit de la projection de pulvérisation de la graisse liquide passant par la buse (18a) d'atomisation.

6. Dispositif selon la revendication 4 ou la revendication 5, caractérisé en ce que le moyen (20) pour produire une pulvérisation, dirigée radialement vers l'intérieur, d'azote liquide comprend :
(a) un anneau tubulaire (20) de pulvérisation, entourant le jet pulvérisé projeté vers le bas par la buse et présentant, le long de sa partie inférieure, plusieurs trous (22) de pulvérisation, régulièrement espacés, les trous (22) étant inclinés vers l'intérieur afin de diriger l'azote liquide ou le dioxyde de carbone liquide, introduit sous pression dans l'anneau (20) pour pulvérisation, en une pulvérisation conique convergeant sur le courant des gouttelettes de graisse liquide atomisée ;
(b) une source externe d'azote liquide sous pression ou de dioxyde de carbone liquide sous pression ; et
(c) un second ensemble de valves, interposé entre la source d'azote liquide ou de dioxyde de carbone liquide et l'anneau de projection par pulvérisation, la ou les valves pouvant fonctionner pour commander la projection par pulvérisation de l'azote liquide ou du dioxyde de carbone liquide passant par l'anneau (20) de pulvérisation.

7. Dispositif selon la revendication 6, caractérisé en ce que la buse (18a) de l'atomiseur et l'anneau (20) tubulaire de projection par pulvérisation sont logés dans un carter ou une enveloppe cylindre (20) et sont disposés au sommet de cette enveloppe s'ouvrant vers le bas dans la partie supérieure de la chambre (14) de mélangeage.

8. Dispositif pour mélanger de la graisse liquide avec de l'alimentation sèche pour animaux afin de produire un mélange fluide (s'écoulant librement), dispositif caractérisé en ce qu'il comporte :
(a) une chambre (14) de mélangeage, équipée d'un moyen pour agiter ensemble le mélange des aliments et les particules de graisse ajoutées ;
(b) plusieurs carters cylindriques (10), distribués le long de la partie supérieure de la chambre (14), chacun ayant à sa partie inférieure une ouverture communiquant avec l'intérieur de la chambre (14) ;
(c) une buse (18a) d'atomisation, disposée à l'intérieur de chacun des carters cylindriques (10), à la partie supérieure de ces carters, et destinée à diriger une pulvérisation, dirigée vers le bas, d'un jet pulvérisé de particules de graisse liquide atomisée pour introduire ce jet dans la partie supérieure du carter cylindrique correspondant quand la buse est fonctionnellement connectée à une source externe, commandée, de graisse liquide et d'air sous pression ; et
(d) un anneau (20) tubulaire de projection par pulvérisation, monté au sein de chacun des carters cylindriques (10) et configuré de manière à entourer le jet pulvérisé, dirigé vers le bas, des gouttelettes de la graisse liquide provenant de la buse (18a) d'atomisation disposée dans ce carter, avec une configuration inversée du jet de liquide cryogénique convergeant sur le jet, dirigé vers le bas, des gouttelettes de graisse liquide provenant de la buse (18a) d'atomisation, quand l'anneau pour projection par pulvérisation est fonctionnellement connecté à une source externe, commandée, de liquide cryogénique sous pression.
